# EUROPEAN PATENT SPECIFICATION

(11) **EP 3 926 710 B1**
(45) Date of publication and mention of the grant of the patent: **01.05.2024**
(21) Application number: 20779769.7
(22) Date of filing: 27.03.2020
(51) Int. Cl.: H01M 4/13, H01M 4/62, H01M 10/052, H01M 4/525, H01M 4/02, H01M 4/131, H01M 10/0525

(54) **ELECTRODE AND SECONDARY BATTERY INCLUDING SAME**
ELEKTRODE UND SEKUNDÄRBATTERIE MIT DERSELBEN
ELECTRODE ET BATTERIE SECONDAIRE LA CONTENANT

(30) Priority: 28.03.2019 KR 20190035776
(43) Date of publication of application: 22.12.2021
(73) Proprietor: LG Energy Solution, Ltd., Seoul 07335 (KR)
(72) Inventor: KIM, Tae Gon, Daejeon 34122 (KR); JUNG, Wang Mo, Daejeon 34122 (KR); YOO, Houng Sik, Daejeon 34122 (KR); LEE, Bo Ram, Daejeon 34122 (KR); KIM, Dong Hyun, Daejeon 34122 (KR); KIM, Hak Yoon, Daejeon 34122 (KR)
(74) Representative: Hoffmann Eitle
(86) International application number: PCT/KR2020/004272
(87) International publication number: WO 2020/197344

(56) References cited:
- EP-A1- 0 854 839
- EP-A1- 3 348 582
- EP-A1- 3 358 651
- EP-A1- 3 933 985
- EP-A1- 3 951 953
- EP-B1- 0 854 839
- KR-A- 20170 030 438
- KR-A- 20170 049 459
- KR-A- 20170 069 141
- KR-A- 20170 069 153
- KR-A- 20170 113 250

## Description

### TECHNICAL FIELD

The present invention relates to an electrode and a secondary battery including the same.

### BACKGROUND ART

A typical example of an electrochemical device using an electrochemical energy may be a secondary battery and there is a trend that its usage area is expanding more and more. In recent years, demand for secondary batteries as an energy source has been significantly increased as technology development and demand with respect to portable devices, such as portable computers, mobile phones, and cameras, have increased, and, among these secondary batteries, lithium secondary batteries having high energy density, i.e., high capacity, have been subjected to considerable research and have been commercialized and widely used.

In general, a secondary battery is composed of a positive electrode, a negative electrode, an electrolyte, and a separator. The positive electrode and the negative electrode are generally composed of an electrode collector, and an electrode active material layer formed on the electrode collector, and the electrode active material layer is prepared by a method in which an electrode slurry composition including an electrode active material, a conductive agent, a binder, etc. is coated on the electrode collector, dried, and then rolled.

Meanwhile, typically, a dot-type conductive agent such as carbon black has mainly been used as a conductive agent for a secondary battery, but there is a limitation in that such a dot-type conductive agent does not have a sufficient effect of improving electrical conductivity. In order to address such a limitation, studies on a method for applying a linear conductive agent such as a carbon nanotube (CNT) and a carbon nanofiber (CNF) and a planar conductive agent such as a graphene have been actively carried out.

However, the linear conductive agent such as a carbon nanotube or a carbon nanofiber has excellent electrical conductivity, but there is a limitation in that dispersibility in slurry is poor due to the characteristics of the material itself that grows in a bundle type or an entangle type, thereby deteriorating coating properties and processability, and the linear conductive agent is not distributed uniformly in the electrode active material layer. In order to address such a limitation, there are attempts to improve dispersibility by introducing a functional group to the linear conductive agent, but in this case, there is a limitation in that a surface side reaction occurs due to the presence of the functional group, thereby deteriorating electrochemical characteristics.

Meanwhile, the planar conductive agent such as a graphene also has excellent electrical conductivity, but there are limitations in that it is hard to produce a graphene of a single layer with a thin thickness, and if a graphene with a thick thickness is used, battery efficiency decreases. In addition, in the case of the planar conductive agent, there is a limitation in that mobility of electrolyte in the battery is limited due to a wide planar contact.

Therefore, the development of an electrode in which a conductive agent is applied which has excellent electrical conductivity and can be distributed uniformly in the electrode is being required.

EP 3 348 582 A1 discloses an electrode formed from a mixture of a carbon nanotube dispersion, an active material and a binder resin, the carbon nanotube dispersion comprising bundle-type carbon nanotubes, a dispersion medium, and partially hydrogenated nitrile rubber having a residual double bond value of 0.5-40 wt%.

### DISCLOSURE OF THE INVENTION

### TECHNICAL PROBLEM

An aspect of the present invention provides a novel electrode which can largely improve electrical conductivity in a battery and can improve life characteristics of the battery due to excellent electrode adhesion.

Another aspect of the present invention provides a secondary battery including the electrode.

### TECHNICAL SOLUTION

According to an aspect of the present invention, there is provided an electrode including an electrode active material layer, wherein the electrode active material layer includes an electrode active material; a hydrogenated nitrile butadiene rubber; and a conductive agent, the conductive agent includes a carbon nanotube structure in which 2 to 5,000 single-walled carbon nanotube units are bonded to each other, and the carbon nanotube structure is included in the electrode active material layer in an amount of 0.01-0.5 wt%.

According to another embodiment of the inventive concept, there is provided a secondary battery including the electrode.

### ADVANTAGEOUS EFFECTS

Since an electrode according to the present invention is prepared by using a conductive agent dispersion in which bundle-type single-walled carbon nanotubes are appropriately dispersed with a hydrogenated nitrile butadiene rubber, carbon nanotube structures in a rope form (long fiber form) may be connected to each other to form a network structure in the electrode. In particular, since the network structure may be formed so as to enable the conductive connection (relatively long distance) between electrode active materials in a secondary particle form as well as the conductive connection between primary materials in the electrode active materials, the conductive path in the electrode may be formed effectively. Accordingly, electrical conductivity in a battery may be largely improved even with an extremely small amount of a conductive agent. In addition, the electrode active material layer is firmly fixed by the carbon nanotube structures forming the network structure, thereby having an effect of the improvement of the electrode adhesion.

Furthermore, when an electrode slurry includes the carbon nanotube structures, powder resistance of the electrode slurry is reduced compared to the related art, thereby achieving an effect of the reduction of the electrode resistance.

### BRIEF DESCRIPTION OF THE DRAWINGS

FIG. 1 is TEM photographs of an electrode of Example 1.
FIG. 2 is SEM photographs taken after drying, on a silicon wafer, the conductive agent dispersion of Preparation Examples 1 to 5 (Preparation Examples 1 to 5 corresponding to FIGS. 2A to 2E, respectively).
FIG. 3 is SEM photographs taken after drying, on a silicon wafer, the conductive agent dispersion of Preparation Example 1 (FIG. 3A) and Preparation Example 6 (FIG. 3B).
FIG. 4 is photographs showing the progress of leaving, for 2 weeks, the conductive agent dispersion of Preparation Examples 1 to 5 (Preparation Examples 1 to 5 corresponding to FIGS. 4A to 4E, respectively).
FIG. 5 is TEM photographs of each conductive agent dispersion used in Example 1 and Comparative Example 4, and SEM photographs of each positive electrode of Example 1 (FIG. 5A) and Comparative Example 4 (FIG. 5B).

### MODE FOR CARRYING OUT THE INVENTION

Terms or words used in this specification and claims should not be interpreted as being limited to a conventional or dictionary meaning, and should be interpreted based on the principle that an inventor can appropriately define the concept of a term in order to explain the invention in the best ways.

The terminology used herein is for the purpose of describing particular exemplary embodiments only and is not intended to limit the present invention. The terms of a singular form may include plural forms unless the context clearly indicates otherwise.

It will be understood that the terms "include," "comprise," or "have" when used in this specification, specify the presence of stated features, numbers, steps, elements, or combinations thereof, but do not preclude the presence or addition of one or more other features, numbers, steps, elements, or combinations thereof.

In the present specification, the expression "%" denotes wt% unless explicitly stated otherwise.

In the present specification, the expression "specific surface area" is measured by a BET method, wherein, specifically, the specific surface area may be calculated from a nitrogen gas adsorption amount at a liquid nitrogen temperature (77K) using BELSORP-mini II by Bell Japan Inc.

Hereinafter, the present invention will be described in detail.

### Electrode

An electrode according to the present invention includes an electrode active material layer, wherein the electrode active material layer includes an electrode active material; a hydrogenated nitrile butadiene rubber; and a conductive agent, the conductive agent includes a carbon nanotube structure in which 2 to 5,000 single-walled carbon nanotube units are bonded to each other, and the carbon nanotube structure is included in the electrode active material layer in an amount of 0.01-0.5 wt%.

The electrode includes an electrode active material layer. The electrode may further include a collector, and in this case, the electrode active material layer may be disposed on one surface or both surfaces of the collector.

The current collector is not particularly limited as long as the material of the current collector has conductivity without causing adverse chemical changes in the battery, and, for example, copper, stainless steel, aluminum, nickel, titanium, an alloy thereof, the same having a surface treated with carbon, nickel, titanium, silver, or the like, sintered carbon, etc. may be used.

The collector may typically have a thickness of 3 um to 500 µm, and microscopic irregularities may be formed on the surface of the collector to improve the adhesion of the electrode active material. In addition, the electrode collector, for example, may be used in various shapes such as that of a film, a sheet, a foil, a net, a porous body, a foam body, a non-woven fabric body, and the like.

The electrode active material layer includes an electrode active material, a hydrogenated nitrile butadiene rubber, and a conductive agent.

The electrode active material may be a positive electrode active material or a negative electrode active material commonly used in the art, and a type thereof is not particularly limited.

For example, at least one metal such as cobalt, manganese, nickel, or aluminum, and a lithium oxide containing lithium may be used as a positive electrode active material. Specifically, the lithium oxide may include a lithium-manganese-based oxide (e.g., LiMnO₂, LiMn₂O, etc.), a lithium-cobalt-based oxide (e.g., LiCoO₂, etc.), a lithium-nickel-based oxide (e.g., LiNiO₂, etc.), a lithium-nickel-manganese-based oxide (e.g., LiNi_{1-Y1}Mn_{Y1}O₂ (where 0<Y1<1), LiNi_{Z1}Mn_{2-Z1}O₄ (where 0<Z1<2), etc.), a lithium-nickel-cobalt-based oxide (e.g., LiNi_{1-Y2}Co_{Y2}O₂ (where 0<Y2<1), etc.), a lithium-manganese-cobalt-based oxide (e.g., LiCo_{1-Y3}Mn_{Y3}O₂ (where 0<Y3<1), LiMn_{2-Z2}Co_{Z2}O₄ (where 0<Z2<2), etc.), a lithium-nickel-cobalt-manganese-based oxide (e.g., Li(Ni_{P1}Co_{Q1}Mn_{R1})O₂ (where 0<P1<1, 0<Q1<1, 0<R1<1, and P1+Q1+R1=1) or Li(Ni_{P2}Co_{Q2}Mn_{R2})O₄ (where 0<P2<2, 0<Q2<2, 0<R2<2, and P2+Q2+R2=2), etc.), or a lithium-nickel-cobalt-manganese-other metal (M) oxide (e.g., Li (Ni_{P3}Co_{Q3}Mn_{R3}M¹_{S})O₂ (where M¹ is selected from the group consisting of Al, Cu, Fe, V, Cr, Ti, Zr, Zn, Ta, Nb, Mg, B, W, and Mo, and P3, Q3, R3, and S are atomic fractions of each independent elements, wherein 0<P3<1, 0<Q3<1, 0<R3<1, 0<S<1, and P3+Q3+R3+S=1), etc.), and any one thereof or two or more thereof may be included.

Meanwhile, the negative electrode active material may include, for example, a carbonaceous material such as artificial graphite, natural graphite, graphitized carbon fibers, and amorphous carbon; a metallic compound alloyable with lithium such as Si, Al, Sn, Pb, Zn, Bi, In, Mg, Ga, Cd, a Si alloy, a Sn alloy, or an Al alloy; a metal oxide which may be doped and undoped with lithium such as SiOᵥ(0 < v < 2), SnO₂, a vanadium oxide, and a lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material.

The electrode active material may be included in an amount of 70 wt% to 99.5 wt%, preferably, 80 wt% to 99 wt% based on a total weight of the electrode active material layer. When the content of the electrode active material satisfies the above range, excellent energy density, electrode adhesion, and electrical conductivity may be achieved.

The conductive agent includes a carbon nanotube structure.

The carbon nanotube structure includes a plurality of single-walled carbon nanotube units. Specifically, the carbon nanotube structure is a carbon nanotube structure in which 2 to 5,000 single-walled carbon nanotube units are bonded to each other, and, more specifically, the carbon nanotube structure may be a carbon nanotube structure in which 2 to 4,500 single-walled carbon nanotube units are bonded to each other. More specifically, in consideration of dispersibility of the carbon nanotube structure and durability of the electrode, it is most preferable that the carbon nanotube structure is a carbon nanotube structure in which 2 to 50 single-walled carbon nanotube units are bonded to each other.

In the carbon nanotube structure, the single-walled carbon nanotube units may be arranged side by side (cylindrical structure in which long axes of the units are bonded in parallel with each other to have flexibility) to form the carbon nanotube structure, and thus the carbon nanotube structure may represent a rope form. In addition, the carbon nanotube structures may be connected to each other to form a network structure in the electrode.

Conventional electrodes including carbon nanotubes are generally prepared by dispersing bundle-type or entangled-type carbon nanotubes (a form in which single-walled carbon nanotube units or multi-walled carbon nanotube units are attached to each other or intertwined) in a dispersion medium to prepare a conductive agent dispersion and then using the conductive agent dispersion. In this case, the carbon nanotubes are completely dispersed in the conventional conductive agent dispersion to exist as a conductive agent dispersion in which carbon nanotube units in the form of a single strand are dispersed. In the conventional conductive agent dispersion, the carbon nanotube units are easily cut by an excessive dispersion process so that the carbon nanotube units have a length shorter than an initial length. In addition, the carbon nanotube units may also be easily cut in a rolling process of the electrode, and an additional limitation occurs in which the carbon nanotube units are cut by an excessive volume change of the electrode active material during operation of the battery. Accordingly, since the conductivity of the electrode is deteriorated, there is a limitation in that input characteristics, output characteristics, and life characteristics of the battery are deteriorated. Furthermore, with respect to the multi-walled carbon nanotube unit, structural defects are high due to a mechanism of node growth (not a smooth linear shape, but nodes are present due to defects generated during a growth process). Thus, during the dispersion process, the multi-walled carbon nanotube units are more easily cut, and the short-cut multi-walled carbon nanotube units are likely to be aggregated with each other via π-ð stacking of carbons of the unit. Accordingly, it is difficult for the multi-walled carbon nanotube units to be more uniformly dispersed and present in an electrode slurry.

Alternatively, since the carbon nanotube structure included in the electrode of the present invention has the form in which 2 to 5,000 single-walled carbon nanotube units, which maintain high crystallinity relatively without structural defects, are bonded side by side to each other, the length thereof may be well maintained without being cut even during the operation of the battery, and thus the conductivity of the electrode may be maintained. Also, since the conductivity of the electrode is increased due to high conductivity of the single-walled carbon nanotube unit having high crystallinity, input characteristics, output characteristics, and life characteristics of the battery may be significantly improved. Furthermore, since the carbon nanotube structures may be connected to each other to have a network structure in the electrode, the excessive volume change of the electrode active material may be suppressed, and, simultaneously, a strong conductive path may be secured, and exfoliation of the electrode active material may be suppressed to significantly improve electrode adhesion.

In the carbon nanotube structure, the single-walled carbon nanotube unit may have an average diameter of 0.5 nm to 10 nm, and particularly, 1 nm to 9 nm. In the case in which the average diameter is satisfied, there is an effect of maximizing the conductivity in the electrode even with an extremely small amount of the conductive agent. The average diameter corresponds to an average value of diameters of top 100 single-walled carbon nanotubes having a large diameter and bottom 100 single-walled carbon nanotubes having a small diameter when the prepared electrode is observed by an SEM.

In the carbon nanotube structure, the single-walled carbon nanotube unit may have an average length of 1 um to 100 µm, and particularly, 5 um to 50 um. In the case in which the average length is satisfied, since a long conductive path for conductive connection between electrode active material particles may be formed and a unique network structure may be formed, there is an effect of maximizing the conductivity in the electrode even with an extremely small amount of the conductive agent. The average length corresponds to an average value of lengths of top 100 single-walled carbon nanotubes having a large length and bottom 100 single-walled carbon nanotubes having a small length when the prepared electrode is observed by an SEM.

The single-walled carbon nanotube unit may have a specific surface area of 500 m²/g to 1,000 m²/g, and particularly, 600 m²/g to 800 m²/g. When the above range is satisfied, since the conductive path in the electrode may be smoothly secured due to the large specific surface area, there is an effect of maximizing the conductivity in the electrode even with an extremely small amount of the conductive agent. The specific surface area of the single-walled carbon nanotube unit may be calculated from a nitrogen gas adsorption amount at a liquid nitrogen temperature (77K) using BELSORP-mini II by Bell Japan Inc.

The carbon nanotube structure is included in an amount of 0.01 wt% to 0.5 wt%, particularly 0.03 wt% to 0.3 wt%, and more particularly 0.05 wt% to 0.2 wt% in the electrode active material layer. When the above range is satisfied, since the conductive path of the electrode may be secured, the life characteristics of the battery may be improved while the electrode resistance is maintained at a low level. In contrast, when the electrode is prepared by using a conductive agent dispersion including conventional single-walled carbon nanotube units which are completely dispersed, the carbon nanotube structure is not included in the electrode active material layer, or may be included in a very low content at an ignorable level even if unintentionally included. In other words, when the electrode is prepared by using a conductive agent dispersion including conventional single-walled carbon nanotube units which are completely dispersed, the above-described content of the carbon nanotube structure cannot be derived.

With respect to the related art in which the electrode includes multi-walled carbon nanotube units, a large content (e.g., greater than 0.5 wt%) of the multi-walled carbon nanotube units had to be used to compensate for low conductivity of the multi-walled carbon nanotube unit. Also, in the case in which the electrode is prepared by using a conductive agent dispersion in which single-walled carbon nanotube units are completely dispersed, the single-walled carbon nanotube units may not be used in a low content because the single-walled carbon nanotube units may be cut.

In contrast, the carbon nanotube structure included in the electrode of the present invention has a form in which 2 to 5,000 single-walled carbon nanotube units are bonded side by side to each other. Therefore, the length thereof may be well maintained without being cut even during the operation of the battery, and thus the conductivity of the electrode may be maintained, and the conductivity of the electrode may be smoothly secured due to the high conductivity of the single-walled carbon nanotube unit. Accordingly, the input characteristics, output characteristics and life characteristics of the battery may be excellent even if the content of the carbon nanotube structure in the electrode is low.

The hydrogenated nitrile butadiene rubber is a material which starts to be included in the electrode from the conductive agent dispersion required for the preparation of an electrode slurry. The hydrogenated nitrile butadiene rubber serves to help the bundle-type carbon nanotubes to be smoothly dispersed in the conductive agent dispersion.

The hydrogenated nitrile butadiene rubber may have a weight-average molecular weight of 50,000 g/mol to 500,000 g/mol, and particularly, 100,000 g/mol to 300,000 g/mol. In the case in which the above range is satisfied, since the hydrogenated nitrile butadiene rubber may easily penetrate between the single-walled carbon nanotube units in the bundle-type carbon nanotubes, appropriate dispersion of the bundle-type carbon nanotubes is possible and phase stability of the conductive agent dispersion may be improved.

The hydrogenated nitrile butadiene rubber may be included in the electrode active material layer in an amount of 0.1 wt% to 5.0 wt%, particularly 0.1 wt% to 3.0 wt%, and more particularly 0.1 wt% to 3.0 wt%, for example, 0.3 wt% to 3.0 wt%. In the case in which the above range is satisfied, the diameter of the carbon nanotube structure may be appropriately controlled, the dispersion stability of the carbon nanotube structure in the electrode slurry may be improved, and the gelation by the compatibility between a binder (in particular, PVdF) and the hydrogenated nitrile butadiene rubber may be prevented. Thus, the input characteristics, output characteristics, and life characteristics of the battery may be improved.

A weight ratio of the carbon nanotube structure to the hydrogenated nitrile butadiene rubber may be in a range of 1:0.1 to 1:10, and particularly 1:1 to 1:5. In the case in which the above range is satisfied, the diameter of the carbon nanotube structure may be appropriately controlled, the dispersion stability of the carbon nanotube structure in the electrode slurry may be further improved, and the gelation by the compatibility between the binder (in particular, PVdF) and the hydrogenated nitrile butadiene rubber may be further prevented. Thus, the input characteristics, output characteristics, and life characteristics of the battery may be improved.

The electrode active material layer may further include the binder. The binder is to secure adhesion between the electrode active material particles or between the electrode active material and the collector, wherein common binders used in the art may be used, and a type thereof is not particularly limited. The binder may include, for example, polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, or various copolymers thereof, and any one thereof or a mixture of two or more thereof may be used.

The binder may be included in an amount of 10 wt% or less, and preferably, 1 wt% to 3 wt% based on a total weight of the electrode active material layer. In the case in which the content of the binder satisfies the above range, excellent electrode adhesion may be achieved while minimizing an increase in resistance of the electrode.

### Method for Preparing Electrode

Next, a method for preparing an electrode of the present invention will be described.

The method for preparing an electrode of the present invention includes: (1) a step for preparing a mixture containing bundle-type carbon nanotubes, a hydrogenated nitrile butadiene rubber, and a dispersion medium; (2) a step for dispersing the bundle-type carbon nanotubes in the mixture to form a conductive agent dispersion; (3) a step for preparing an electrode slurry containing the conductive agent dispersion and an electrode active material; and (4) a step for coating the electrode slurry on a collector and then drying the coated collector. The electrode of the above-described embodiment may be prepared by the above method.

### (1) Step for Preparing Mixture

The mixture may be prepared by injecting the bundle-type carbon nanotubes and the hydrogenated nitrile butadiene rubber into the dispersion medium. In the bundle-type carbon nanotube, the above-described single-walled carbon nanotube units are aggregated to be present in the form of a bundle, wherein the bundle-type carbon nanotube includes usually two or more single-walled carbon nanotube units. Specifically, the number of the carbon nanotube units constituting the bundle-type carbon nanotube is greater than the number of the carbon nanotube units constituting the above-described carbon nanotube structure.

Since the hydrogenated nitrile butadiene rubber is the same as the above-described hydrogenated nitrile butadiene rubber, the description will be omitted.

A weight ratio of the bundle-type carbon nanotube to the hydrogenated nitrile butadiene rubber may be in a range of 1:0.1 to 1:10, and particularly 1:1 to 1:5. The diameter of the carbon nanotube structure may be appropriately controlled, the dispersion stability of the carbon nanotube structure in the electrode slurry may be further improved, and the gelation by the compatibility between the binder (in particular, PVdF) and the hydrogenated nitrile butadiene rubber may be further prevented. Thus, the input characteristics, output characteristics, and life characteristics of the battery may be improved.

The dispersion medium may include, for example, amide-based polar organic solvents such as dimethylformamide (DMF), diethyl formamide, dimethyl acetamide (DMAc), and N-methyl pyrrolidone (NMP); alcohols such as methanol, ethanol, 1-propanol, 2-propanol (isopropyl alcohol), 1-butanol (n-butanol), 2-methyl-1-propanol (isobutanol), 2-butanol (sec-butanol), 1-methyl-2-propanol (tert-butanol), pentanol, hexanol, heptanol, or octanol; glycols such as ethylene glycol, diethylene glycol, triethylene glycol, propylene glycol, 1,3-propanediol, 1,3-butanediol, 1,5-pentanediol, or hexylene glycol; polyhydric alcohols such as glycerin, trimethylolpropane, pentaerythritol, or sorbitol; glycol ethers such as ethylene glycol mono methyl ether, diethylene glycol mono methyl ether, triethylene glycol mono methyl ether, tetra ethylene glycol mono methyl ether, ethylene glycol mono ethyl ether, diethylene glycol mono ethyl ether, triethylene glycol mono ethyl ether, tetra ethylene glycol mono ethyl ether, ethylene glycol mono butyl ether, diethylene glycol mono butyl ether, triethylene glycol mono butyl ether, or tetra ethylene glycol mono butyl ether; ketones such as acetone, methyl ethyl ketone, methylpropyl ketone, or cyclopentanone; and esters such as ethyl acetate, γ-butyl lactone, and ε-propiolactone, and any one thereof or a mixture of two or more thereof may be used, but is not limited thereto. Specifically, the dispersion medium may be N-methyl pyrrolidone (NMP).

A solid content in the mixed solution may be in a range of 0.1 wt% to 10 wt%, and particularly, 1 wt% to 5 wt%. The diameter of the carbon nanotube structure may be appropriately controlled, and the dispersion stability of the carbon nanotube structure in the electrode slurry may be further improved. In addition, the electrode slurry may have the high content of solids while maintaining appropriate viscosity and elasticity.

### (2) Step for Forming Conductive Agent Dispersion

A process for dispersing the bundle-type carbon nanotubes in the mixture may be performed by using a mixing device such as a homogenizer, a bead mill, a ball mill, a basket mill, an attrition mill, a universal stirrer, a clear mixer, a spike mill, a TK mixer, or an ultrasonic dispersion (sonification) equipment. Among these, a bead mill method is preferable in that the diameter size of the carbon nanotube structure can be controlled, the uniform distribution of the carbon nanotube structures may be achieved, and there is an advantage in costs.

The bead mill method may be as follows. The mixture is added to a container containing beads, the container is rotated, and thus the bundle-type carbon nanotubes may be dispersed.

In this case, conditions in which the bead mill method is performed is as follows.

An average diameter of the beads may be 0.5 mm to 1.5 mm, and particularly, 0.5 mm to 1.0 mm. In the case in which the range is satisfied, during the dispersing process, the carbon nanotube structure is not broken and the diameter thereof can be appropriately controlled, and a dispersion solution having a uniform composition may be prepared.

The revolution speed of the container may be 500 RPM to 10,000 RPM, and particularly 2,000 RPM to 6,000 RPM. In the case in which the range is satisfied, during the dispersing process, the carbon nanotube structure is not broken and the diameter thereof can be appropriately controlled, and a dispersion solution having a uniform composition may be prepared.

The time for performing the bead mill may be 0.5 hours to 10 hours, particularly, 1 hour to 5 hours, and more particularly, 1 hour to 2 hours. In the case in which the range is satisfied, during the dispersing process, the carbon nanotube structure is not broken and the diameter thereof can be appropriately controlled, and a dispersion solution having a uniform composition may be prepared. The time for performing the bead mill means a total time of using the bead mill, and for example, if the bead mill is performed several times, it means the total time taken over the several times.

The bead mill conditions are for appropriately dispersing the bundle-type carbon nanotubes, and particularly, except where the bundle-type carbon nanotubes are completely dispersed into a strand of the single-walled carbon nanotubes. That is, the bead mill conditions are for appropriately dispersing the bundle-type carbon nanotubes to form the carbon nanotube structure in which 2 to 5,000 single-walled carbon nanotube units are bonded side by side to each other in the prepared conductive agent dispersion. This may be achieved only in the case where a composition of the mixture, the bead mill conditions, etc. are strictly controlled.

Through the process, the conductive agent dispersion containing the carbon nanotube structures may be formed.

### (3) Step for Preparing Electrode Slurry

When the conductive agent dispersion is prepared by the above-described process, an electrode active material is mixed with the conductive agent dispersion to form an electrode slurry. In this case, the above-described electrode active materials may be used as the electrode active material.

In addition, a binder and a solvent may be further included in the electrode slurry as needed. In this case, the binder of the above-described embodiment may be used as the binder. The solvent, for example, may include amide-based polar organic solvents such as dimethylformamide (DMF), diethyl formamide, dimethyl acetamide (DMAc), and N-methyl pyrrolidone (NMP); alcohols such as methanol, ethanol, 1-propanol, 2-propanol (isopropyl alcohol), 1-butanol (n-butanol), 2-methyl-1-propanol (isobutanol), 2-butanol (sec-butanol), 1-methyl-2-propanol (tert-butanol), pentanol, hexanol, heptanol, or octanol; glycols such as ethylene glycol, diethylene glycol, triethylene glycol, propylene glycol, 1,3-propanediol, 1,3-butanediol, 1,5-pentanediol, or hexylene glycol; polyhydric alcohols such as glycerin, trimethylolpropane, pentaerythritol, or sorbitol; glycol ethers such as ethylene glycol mono methyl ether, diethylene glycol mono methyl ether, triethylene glycol mono methyl ether, tetra ethylene glycol mono methyl ether, ethylene glycol mono ethyl ether, diethylene glycol mono ethyl ether, triethylene glycol mono ethyl ether, tetra ethylene glycol mono ethyl ether, ethylene glycol mono butyl ether, diethylene glycol mono butyl ether, triethylene glycol mono butyl ether, or tetra ethylene glycol mono butyl ether; ketones such as acetone, methyl ethyl ketone, methylpropyl ketone, or cyclopentanone; and esters such as ethyl acetate, γ-butyl lactone, and ε-propiolactone, and any one thereof or a mixture of two or more thereof may be used, but the present invention is not limited thereto. The solvent may be the same or different from the dispersion medium used in the predispersion, and may preferably be N-methyl pyrrolidone (NMP).

Meanwhile, in this case, the electrode active material may be included in an amount of 70 wt% to 99.5 wt%, and preferably, 80 wt% to 99 wt% based on a total solid content in the electrode slurry. When the content of the electrode active material satisfies the above range, excellent energy density, electrode adhesion, and electrical conductivity may be achieved.

Also, in the case in which the binder is included, the binder may be included in an amount of 10 wt% or less, particularly, 0.5 wt% to 5 wt%, and preferably 1 wt% to 3 wt% based on the total solid content in the electrode slurry.

The solid content in the electrode slurry may be in a range of 60 wt% to 80 wt%, and particularly, 65 wt% to 75 wt%. In the case in which the above range is satisfied, migration of the conductive agent and the binder due to evaporation of the solvent may be suppressed during drying after electrode slurry coating, and an electrode having excellent electrode adhesion and electrical conductivity may be prepared. Furthermore, a high-quality electrode with less deformation during rolling may be prepared.

### (4) Step for Forming Electrode Active Material Layer

Next, an electrode active material layer is formed by coating and drying the electrode slurry prepared as described above. Specifically, the electrode active material layer may be formed by a method of coating the electrode slurry on an electrode collector and then drying the coated collector, or may be formed by a method of casting the electrode slurry on a separate support and then laminating a film separated from the support on the electrode collector. If necessary, after the electrode active material layer is formed by the above-described method, a rolling process may be further performed.

In this case, the drying and rolling may be performed under appropriate conditions in consideration of physical properties of the electrode to be finally prepared, and are not particularly limited.

### SECONDARY BATTERY

Next, a secondary battery according to the present invention will be described.

The secondary battery according to the present invention includes an electrode of the present invention as described above. In this case, the electrode may be at least one among a positive electrode and a negative electrode. Specifically, the secondary battery according to the present invention may include a positive electrode, a negative electrode, a separator disposed between the positive electrode and the negative electrode, and an electrolyte. In this case, at least one among the positive electrode and the negative electrode includes the above-described electrode of the present invention, i.e., the electrode active material layer, wherein the electrode active material layer includes an electrode active material; a hydrogenated nitrile butadiene rubber; and a conductive agent, the conductive agent includes a carbon nanotube structure in which 2 to 5,000 single-walled carbon nanotube units are bonded, and the carbon nanotube structure may be included in the electrode active material layer in an amount of 0.01-0.5 wt%. Preferably, the electrode of the present invention may be a positive electrode. Since the electrode according to the present invention has been described above, the detailed descriptions will be omitted and only other components will be described below.

The separator separates the positive electrode and the negative electrode and provides a movement path of lithium ions, wherein any separator may be used as the separator without particular limitation as long as it is typically used in a secondary battery. Specifically, a porous polymer film, for example, a porous polymer film prepared from a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used as the separator. Also, a typical porous nonwoven fabric, for example, a nonwoven fabric formed of high melting point glass fibers or polyethylene terephthalate fibers may be used. Furthermore, a coated separator including a ceramic component or a polymer component may be used to secure heat resistance or mechanical strength, and the separator having a single layer or multilayer structure may be selectively used.

The electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but is not limited thereto.

Specifically, the electrolyte may include a non-aqueous organic solvent and a metal salt.

For example, aprotic organic solvents such as N-methyl-2-pyrrolidinone, propylene carbonate, ethylene carbonate, butylene carbonate, dimethyl carbonate, diethyl carbonate, γ-butyrolactone, 1,2-dimethoxy ethane, tetrahydroxy franc, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate may be used as the non-aqueous organic solvent.

In particular, ethylene carbonate and propylene carbonate, ring-type carbonates among the carbonate-based organic solvents, well dissociate a lithium salt in the electrolyte solution due to high dielectric constants as high-viscosity organic solvents, and thus, the ring-type carbonate may be preferably used. Since an electrolyte solution having high electrical conductivity may be prepared when the ring-type carbonate is mixed with low-viscosity, low-dielectric constant linear carbonate, such as dimethyl carbonate and diethyl carbonate, in an appropriate ratio, the ring-type carbonate may be more preferably used.

A lithium salt may be used as the metal salt, and the lithium salt is a material that is readily soluble in the non-aqueous electrolyte solution, wherein, for example, at least one selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻ may be used as an anion of the lithium salt.

At least one additive, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above-described electrolyte components for the purpose of improving life characteristics of the battery, preventing a decrease in battery capacity, and improving discharge capacity of the battery.

The secondary battery according to the present invention as above has excellent electrode adhesion and excellent life characteristics at a high temperature compared to a typical secondary battery.

Hereinafter, the present invention will be described in more detail, according to specific examples.

### Preparation Example 1: Preparation of Conductive Agent Dispersion

Bundle-type carbon nanotubes (having a specific surface area of 650 m²/g) composed of single-walled carbon nanotube units having an average diameter of 1.5 nm and an average length of 5 um or longer and hydrogenated nitrile butadiene rubbers (weight-average molecular weight: 260,000g/mol) were mixed in N-methyl pyrrolidone (NMP) that is a solvent to prepare a mixture so that a solid content was 2.4 wt%.

The mixture was stirred in a bead-mill method, and the bundle-type carbon nanotubes were dispersed in the solvent to prepare a conductive agent dispersion. In this case, the diameter of the beads was 1 mm, the revolution speed of the agitation container containing the beads was 3,000 RPM, and the stirring was performed for 60 minutes. The conductive agent dispersion included a carbon nanotube structure having a form in which 2 to 5,000 single-walled carbon nanotube units were bonded side by side to each other.

In the conductive agent dispersion, an amount of the carbon nanotube structures was 0.4 wt%, and an amount of the hydrogenated nitrile butadiene rubbers was 2.0 wt%.

### Preparation Example 2: Preparation of Conductive Agent Dispersion

A conductive agent dispersion was prepared in the same manner as in Preparation Example 1 except for preparing the conductive agent dispersion so that 0.4 wt% of the carbon nanotube structures and 0.2 wt% of the hydrogenated nitrile butadiene rubbers were present in the conductive agent dispersion.

### Preparation Example 3: Preparation of Conductive Agent Dispersion

A conductive agent dispersion was prepared in the same manner as in Preparation Example 1 except that a polyvinylidene fluoride ((PVdF, Solef-5130) having a weight average molecular weight of 880,000 g/mol was used instead of the hydrogenated nitrile butadiene rubber.

### Preparation Example 4: Preparation of Conductive Agent Dispersion

A conductive agent dispersion was prepared in the same manner as in Preparation Example 1 except that a polyvinylidene fluoride ((PVdF, KF9700) having a weight average molecular weight of 880,000 g/mol was used instead of the hydrogenated nitrile butadiene rubber.

### Preparation Example 5: Preparation of Conductive Agent Dispersion

A conductive agent dispersion was prepared in the same manner as in Preparation Example 1 except that the hydrogenated nitrile butadiene rubber was not used.

### Preparation Example 6: Preparation of Conductive Agent Dispersion

A conductive agent dispersion was prepared in the same manner as in Preparation Example 1 except that bundle-type carbon nanotubes (having a specific surface area of 185 m²/g) composed of multi-walled carbon nanotube units having an average diameter of 10 nm and an average length of 1 um were used instead of the bundle-type carbon nanotube used in Preparation Example 1.

### Experimental Example 1: Observation of Dispersibility and Formation of Carbon Nanotube Structure in Conductive Agent Dispersion

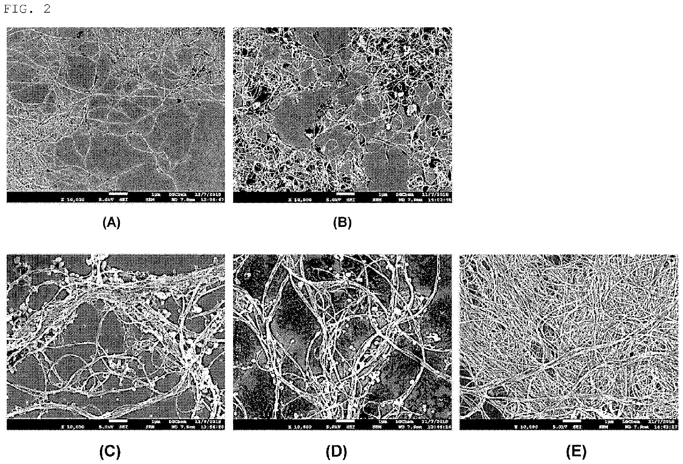

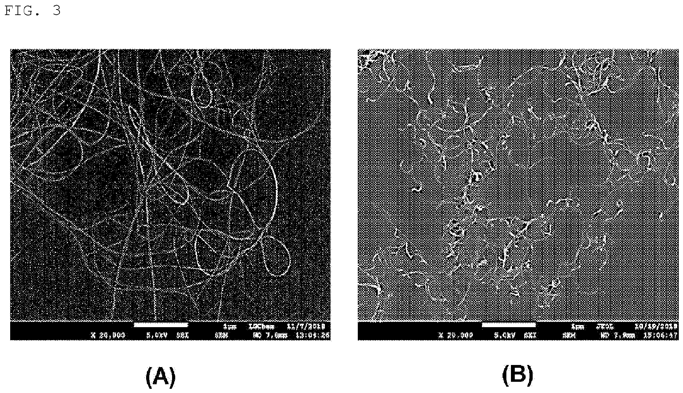

With respect to each of Preparation Examples 1 to 6, the dispersibility and the formation of the carbon nanotube structure were observed through an SEM, and the results are shown in FIGS. 2 and 3. FIGS. 2A to 2E sequentially correspond to Preparation Examples 1 to 5, respectively. FIG. 3A corresponds to Preparation Example 1, and FIG. 3B to Preparation Example 6.

### Experimental Example 2: Evaluation of Formation of Bundle-type Carbon Nanotubes in Conductive Agent Dispersion

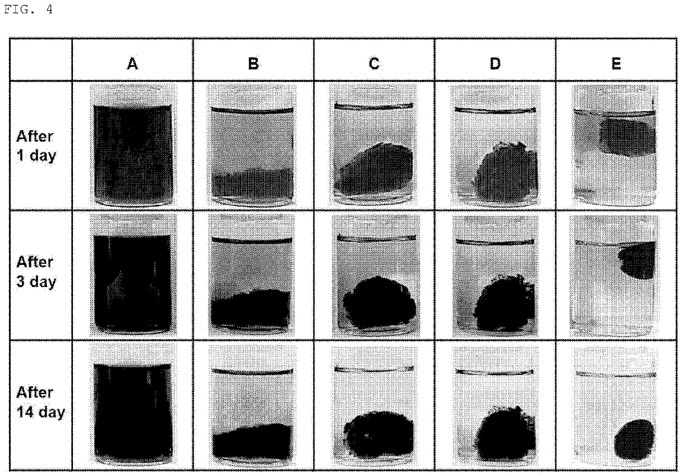

The conductive agent dispersions of Preparation Examples 1 to 5 was left at 25 °C for 2 weeks, and the results are shown in FIG. 4.

Referring to FIG. 2, in the case of Preparation Examples 1 and 2, it may be seen that a carbon nanotube structure in which 2 to 5,000 single-walled carbon nanotube units were bonded side by side to each other is present. In addition, it may be seen that the dispersion degrees of Preparation Examples 1 and 2 in which the hydrogenated nitrile butadiene rubber was used as a dispersant are better than those of Preparation Examples 3 and 4 in which polyvinylidene fluoride was used and that of Preparation Example 5 without using a dispersant. In addition, referring to FIG. 4, since the dispersion degrees of Preparation Examples 1 and 2 are better than other Preparation Examples, it may be seen that the dispersibility is maintained best even after left for a long time. Furthermore, since in Preparation Example 1, 2.0 wt% of the hydrogenated nitrile butadiene rubber was used, the dispersibility of Preparation Example 1 is better than that of Preparation Example 2 in which 0.2 wt% thereof was used.

Referring to FIG. 3, it may be seen that the single-walled carbon nanotube units in the conductive dispersion of Preparation Example 1 are not cut and maintained in a long fiber length, and show high dispersibility. On the other hand, it may be seen that the multi-walled carbon nanotube units in the conductive dispersion of Preparation Example 6 are mostly cut and present only in a length of 1 um, and have low dispersibility, even though the dispersion process under the same conditions is applied.

Accordingly, it may be seen that the use of the hydrogenated nitrile butadiene rubber, the content thereof, and the appropriate use of the bundle-type carbon nanotubes composed of the single-walled carbon nanotube units can improve dispersibility and conductivity.

### Examples and Comparative Examples

### Example 1: Manufacture of positive electrode

LiNi_{0.6}Co_{0.2}Mn_{0.2}O₂ (NCM622) and a binder (PVDF, KF9700) were added to the conductive agent dispersion of Preparation Example 1, and N-methylpyrrolidone (NMP) was additionally added to prepare a positive electrode slurry having a solid content of 72.0 wt%. The positive electrode slurry was coated on an Al thin film current collector having a thickness of 20 um, dried at 130 °C, and rolled to prepare a positive electrode including a positive electrode active material layer.

In the positive electrode active material layer, the LiNi_{0.6}Co_{0.2}Mn_{0.2}O₂ (NCM622) is included in an amount of 97.9 wt%, the binder is included in an amount of 1.8 wt%, the hydrogenated nitrile butadiene rubber is included in an amount of 0.25 wt%, and the carbon nanotube structure is included in an amount of 0.05 wt%.

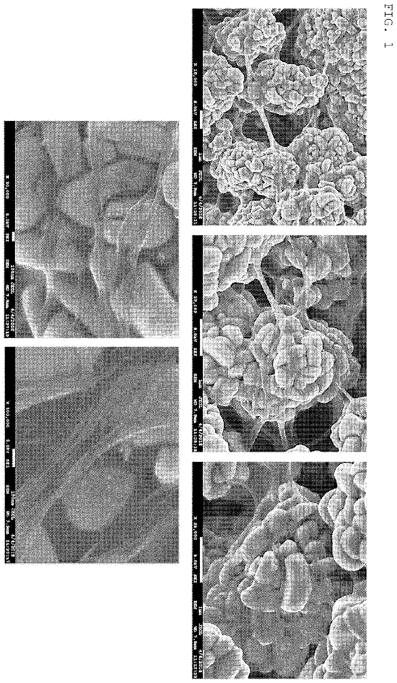

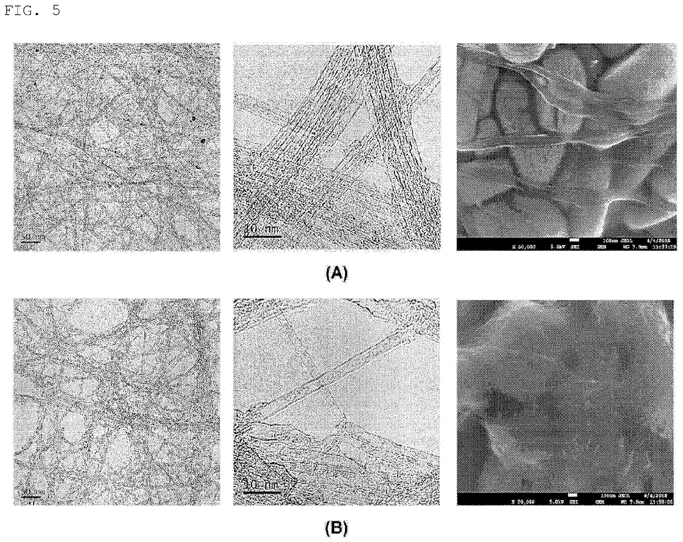

Referring to FIGS. 1 and 5A, it may be seen that in the positive electrode of Example 1, a carbon nanotube structure in a rope form forms a network structure and connects NCM622 to each other.

### Example 2: Manufacture of positive electrode

LiNi_{0.6}Co_{0.2}Mn_{0.2}O₂ (NCM622) and a binder (PVDF, KF9700) were added to the conductive agent dispersion of Preparation Example 1, and N-methylpyrrolidone (NMP) was additionally added to prepare a positive electrode slurry having a solid content of 70.1 wt%. The positive electrode slurry was coated on an Al thin film current collector having a thickness of 20 um, dried at 130 °C, and rolled to prepare a positive electrode including a positive electrode active material layer.

In the positive electrode active material layer, the LiNi_{0.6}Co_{0.2}Mn_{0.2}O₂ (NCM622) is included in an amount of 97.6 wt%, the binder is included in an amount of 1.8 wt%, the hydrogenated nitrile butadiene rubber is included in an amount of 0.5 wt%, and the carbon nanotube structure is included in an amount of 0.1 wt%.

### Comparative Example 1: Manufacture of positive electrode

### (1) Preparation of Conductive Agent Dispersion

A carbon black having a specific surface area of 240 m²/g and hydrogenated nitrile butadiene rubbers (weight average molecular weight: 260,000 g/mol) were mixed with N-methylpyrrolidone (NMP) that is a solvent to prepare a mixture having a solid content of 16.5 wt%.

The mixture was stirred in a bead-mill method, and bundle-type carbon nanotubes were dispersed in the solvent to prepare a conductive agent dispersion. In this case, the diameter of the beads was 1 mm, the revolution speed of the agitation container containing the beads was 3,000 RPM, and the stirring was performed for 60 minutes.

In the conductive agent dispersion, an amount of the carbon black was 15 wt%, and an amount of the hydrogenated nitrile butadiene rubbers was 1.5 wt%.

### (2) Preparation of Positive Electrode

LiNi_{0.6}Co_{0.2}Mn_{0.2}O₂ (NCM622) and a binder (PVDF, KF9700) were added to the conductive agent dispersion, and N-methylpyrrolidone (NMP) was additionally added to prepare a positive electrode slurry having a solid content of 72.0 wt%. The positive electrode slurry was coated on an Al thin film current collector having a thickness of 20 um, dried at 130 °C, and rolled to prepare a positive electrode including a positive electrode active material layer.

In the positive electrode active material layer, the LiNi_{0.6}Co_{0.2}Mn_{0.2}O₂ (NCM622) is included in an amount of 96.35 wt%, the binder is included in an amount of 2.0 wt%, the hydrogenated nitrile butadiene rubber is included in an amount of 0.15 wt%, and the carbon black is included in an amount of 1.5 wt%.

### Comparative Example 2: Manufacture of positive electrode

LiNi_{0.6}Co_{0.2}Mn_{0.2}O₂ (NCM622) and a binder (PVDF, KF9700) were added to the conductive agent dispersion of Preparation Example 6, and N-methylpyrrolidone (NMP) was additionally added to prepare a positive electrode slurry having a solid content of 72.1 wt%. The positive electrode slurry was coated on an Al thin film current collector having a thickness of 20 um, dried at 130 °C, and rolled to prepare a positive electrode including a positive electrode active material layer.

In the positive electrode active material layer, the LiNi_{0.6}Co_{0.2}Mn_{0.2}O₂ (NCM622) is included in an amount of 97.48 wt%, the binder is included in an amount of 1.8 wt%, the hydrogenated nitrile butadiene rubber is included in an amount of 0.12 wt%, and the multi-walled carbon nanotube is included in an amount of 0.6 wt%.

### Comparative Example 3: Manufacture of positive electrode

LiNi_{0.6}Co_{0.2}Mn_{0.2}O₂ (NCM622) and a binder (PVDF, KF9700) were added to the conductive agent dispersion of Preparation Example 6, and N-methylpyrrolidone (NMP) was additionally added to prepare a positive electrode slurry having a solid content of 71.8 wt%. The positive electrode slurry was coated on an Al thin film current collector having a thickness of 20 um, dried at 130 °C, and rolled to prepare a positive electrode including a positive electrode active material layer.

In the positive electrode active material layer, the LiNi_{0.6}Co_{0.2}Mn_{0.2}O₂ (NCM622) is included in an amount of 97.04 wt%, the binder is included in an amount of 2.0 wt%, the hydrogenated nitrile butadiene rubber is included in an amount of 0.16 wt%, and the multi-walled carbon nanotube is included in an amount of 0.8 wt%.

### Comparative Example 4: Manufacture of positive electrode

### (1) Preparation of Conductive Agent Dispersion

Bundle-type carbon nanotubes (having a specific surface area of 650 m²/g) composed of single-walled carbon nanotube units having an average diameter of 1.5 nm and an average length of 5 um or longer and hydrogenated nitrile butadiene rubbers (weight-average molecular weight: 260,000 g/mol) were mixed in N-methyl pyrrolidone (NMP) that is a solvent to prepare a mixture so that a solid content was 4.4 wt%.

The mixture was stirred in a bead-mill method, and the bundle-type carbon nanotubes were dispersed in the solvent to prepare a conductive agent dispersion. In this case, the diameter of the beads was 1 mm, the revolution speed of the agitation container containing the beads was 3,000 RPM, and when one cycle was performing the stirring for 60 minutes, a total of four cycles (60 minutes natural cooling between cycles) was performed.

In the conductive material dispersion, an amount of the bundle-type carbon nanotubes was 0.4 wt%, and an amount of the hydrogenated nitrile butadiene rubbers was 4.0 wt%.

### (2) Preparation of Positive Electrode

LiNi_{0.6}Co_{0.2}Mn_{0.2}O₂ (NCM622) and a binder (PVDF, KF9700) were added to the conductive agent dispersion, and N-methylpyrrolidone (NMP) was additionally added to prepare a positive electrode slurry having a solid content of 72.0 wt%. The positive electrode slurry was coated on an Al thin film current collector having a thickness of 20 um, dried at 130 °C, and rolled to prepare a positive electrode including a positive electrode active material layer.

In the positive electrode active material layer, the LiNi_{0.6}Co_{0.2}Mn_{0.2}O₂ (NCM622) is included in an amount of 97.65 wt%, the binder is included in an amount of 1.8 wt%, the hydrogenated nitrile butadiene rubber is included in an amount of 0.5 wt%, and the single-walled carbon nanotube is included in an amount of 0.05 wt%. Referring to FIG. 5B, no carbon nanotube structure is observed in the positive electrode active material layer, and it may be seen that single-walled carbon nanotube units exist individually as a single strand. Although it is observed that the single-walled carbon nanotube units are partially overlapped in FIG. 5B, this is not a bonded state, but it is only observed that the single-walled carbon nanotube units are overlapped above and below the observation direction, and the orientation is not the same.

### Experimental Example 3

Each positive electrode slurry used to prepare the positive electrodes of Examples 1 and 2 and Comparative Examples 1 to 4 was dried in vacuum at 130 °C for 3 hours, and then pulverized to prepare powder. Thereafter, by using the Loresta GP equipment of Mitsubishi Chemical Analytech Co., Ltd., pellets were prepared under a load of 9.8 MPa at 25 °C, and in an atmosphere of 50% relative humidity. Then, the powder resistance was measured by the 4-probe method. The measurement results are shown in Table 1 below.

### Experimental Example 4

Each adhesion of the positive electrodes prepared in Examples 1 and 2 and Comparative Examples 1 to 4 was measured by a 90° peel test method.

Specifically, a double-sided tape is attached to a slide glass, and the electrode blanked into 20 mm × 180 mm was placed on the slide glass and attached thereto by reciprocating 10 times with a 2 kg roller, and then pulled at 200 mm/min by using a UTM (TA company) device to measure the peeling force from the slide glass. In this case, the measuring angle of the slide glass and the electrode was 90°. The measurement results are shown in Table 1 below.

### Experimental Example 5

A monocell was prepared by combining the positive electrode, the negative electrode, and a 15 um-thick polyethylene-based separator prepared according to Examples 1 and 2 and Comparative Examples 1 to 4. In this case, the negative electrode was prepared by mixing graphite, SBR/CMC, and a conductive agent in a weight ratio of 96.5:2.5:1 to prepare a negative electrode slurry, which was coated on 10 um copper foil and dried at 100 °C. Then, an electrolyte solution in which 1M LiPF₆ was dissolved was injected to a mixed solvent (DEC:EC=1:1) of dimethyl carbonate (DEC) and ethylene carbonate (EC) to manufacture a lithium secondary battery.

The lithium secondary battery prepared as described above was charged and discharged at 45 °C at 0.33 C/0.33 C for 60 times, and then the life characteristics were measured by using the measured charge and discharge efficiency. The measurement results are shown in Table 1 below.

**[Table 1]**

| | Example 1 | Example 2 | Comparative Example 1 | Comparative Example 2 | Comparative Example 3 | Comparative Example 4 |
|---|---|---|---|---|---|---|
| Conductive agent specific surface area (m²/g) | 650 | 650 | 240 | 185 | 185 | 650 |
| Conductive agent content (wt%) | 0.05 (carbon nanotube structure) | 0.1 (carbon nanotube structure) | 1.5 (carbon black) | 0.6 (multi-walled carbon nanotube units) | 0.8 (multi-walled carbon nanotube units) | 0.05 (completely dispersed carbon nanotube units) |
| Binder content (wt%) | 1.8 | 1.8 | 2.0 | 1.8 | 2.0 | 1.8 |
| Slurry solids (wt%) | 72 | 73.3 | 72.0 | 72.1 | 72.0 | 73.3 |
| Slurry powder resistance (Ω·cm) | 21.8 | 22.7 | 154 | 72.7 | 29.6 | 1,580 |
| Electrode adhesion (gf/20 mm) | 20.6 | 20.9 | 19.7 | 14.1 | 19.0 | 3.1 |
| Life characteristic (%) | 98.7 | 98.1 | 93.8 | 94.5 | 95.4 | 85.5 |

Referring to Table 1, it may be seen that the electrode adhesion and life characteristics of Examples 1 and 2 including the carbon nanotube structure described in the present specification are high, and the powder resistance of the slurry used in manufacturing the electrode is low.

In particular, in the case of Comparative Examples 2 and 3, as the multi-walled carbon nanotube unit was cut in the dispersion process, it is difficult to maintain the conductive path, and thus the powder resistance of the slurry is high, and the conductive network structure was difficult to be formed in the electrode, and thus it seems to have low electrode adhesion and life characteristics.

In Comparative Example 4, the bundle-type carbon nanotubes were excessively dispersed, so that the single-walled carbon nanotubes were individually separated as a single strand to exist in the electrode. In addition, the single-walled carbon nanotubes are cut during the battery manufacturing process, cannot form a network structure like a rope-type carbon nanotube structure, and only exist in close contact with the surface of the electrode active material. Accordingly, since the conductive network cannot be maintained smoothly, it may be seen that the slurry powder resistance is high, and the electrode adhesion and life characteristics are low.

## Claims

1. An electrode comprising an electrode active material layer which comprises an electrode active material, a hydrogenated nitrile butadiene rubber, and a conductive agent;
wherein the conductive agent comprises a carbon nanotube structure in which 2 to 5,000 single-walled carbon nanotube units are bonded to each other; and
wherein the carbon nanotube structure is included in the electrode active material layer in an amount of 0.01-0.5 wt%.

2. The electrode of claim 1, wherein a plurality of the carbon nanotube structures are connected to each other to form a network structure in the electrode.

3. The electrode of claim 1, wherein, in the carbon nanotube structure, the single-walled carbon nanotube units are arranged side by side and bonded.

4. The electrode of claim 1, wherein the single-walled carbon nanotube units have an average diameter of 0.5 nm to 10 nm, this being the average of the diameters of the top 100 single-walled carbon nanotubes having the largest diameters and the bottom 100 single-walled carbon nanotubes having the smallest diameters when the electrode is observed using a scanning electron microscope.

5. The electrode of claim 1, wherein the single-walled carbon nanotube units have an average length of 1 µm to 100 µm, this being the average of the lengths of the top 100 single-walled carbon nanotubes having the largest lengths and the bottom 100 single-walled carbon nanotubes having the smallest lengths when the electrode is observed using a scanning electron microscope.

6. The electrode of claim 1, wherein the single-walled carbon nanotube units have a specific surface area of 500 m²/g to 1,000 m²/g, as determined by a BET method.

7. The electrode of claim 1, wherein the hydrogenated nitrile butadiene rubber has a weight average molecular weight of 50,000 g/mol to 500,000 g/mol.

8. The electrode of claim 1, wherein the weight ratio of the carbon nanotube structure and the hydrogenated nitrile butadiene rubber is 1:0.1 to 1:10.

9. The electrode of claim 1, which is a positive electrode.

10. A secondary battery comprising the electrode of claim 1.

## Patentansprüche

1. Elektrode, umfassend eine Elektrodenaktivmaterialschicht, die ein Elektrodenaktivmaterial, einen hydrierten Nitrilbutadienkautschuk und ein leitfähiges Mittel umfasst;
wobei das leitfähige Mittel eine Kohlenstoffnanoröhrenstruktur umfasst, in der 2 bis 5.000 einwandige Kohlenstoffnanoröhreneinheiten aneinander gebunden sind; und
wobei die Kohlenstoffnanoröhrenstruktur in der Elektrodenaktivmaterialschicht in einer Menge von 0,01-0,5 Gew.-% enthalten ist.

2. Elektrode gemäß Anspruch 1, wobei eine Mehrzahl der Kohlenstoffnanoröhrenstrukturen miteinander verbunden sind, um eine Netzwerkstruktur in der Elektrode zu bilden.

3. Elektrode gemäß Anspruch 1, wobei in der Kohlenstoffnanoröhrenstruktur die einwandigen Kohlenstoffnanoröhreneinheiten nebeneinander angeordnet und miteinander verbunden sind.

4. Elektrode gemäß Anspruch 1, wobei die einwandigen Kohlenstoffnanoröhreneinheiten einen durchschnittlichen Durchmesser von 0,5 nm bis 10 nm aufweisen, wobei dies der Durchschnitt der Durchmesser der oberen 100 einwandigen Kohlenstoffnanoröhren mit den größten Durchmessern und der unteren 100 einwandigen Kohlenstoffnanoröhren mit den kleinsten Durchmessern ist, wenn die Elektrode unter Verwendung eines Rasterelektronenmikroskops betrachtet wird.

5. Elektrode gemäß Anspruch 1, wobei die einwandigen Kohlenstoffnanoröhreneinheiten eine durchschnittliche Länge von 1 um bis 100 um aufweisen, wobei dies der Durchschnitt der Längen der oberen 100 einwandigen Kohlenstoffnanoröhren mit den größten Längen und der unteren 100 einwandigen Kohlenstoffnanoröhren mit den kleinsten Längen ist, wenn die Elektrode unter Verwendung eines Rasterelektronenmikroskops beobachtet wird.

6. Elektrode gemäß Anspruch 1, wobei die einwandigen Kohlenstoffnanoröhreneinheiten eine spezifische Oberfläche von 500 m²/g bis 1.000 m²/g aufweisen, wie durch ein BET-Verfahren bestimmt.

7. Elektrode gemäß Anspruch 1, wobei der hydrierte Nitrilbutadienkautschuk ein gewichtsmittleres Molekulargewicht von 50.000 g/mol bis 500.000 g/mol aufweist.

8. Elektrode gemäß Anspruch 1, wobei das Gewichtsverhältnis von der Kohlenstoffnanoröhrenstruktur zu dem hydrierten Nitrilbutadienkautschuk 1:0,1 bis 1:10 beträgt.

9. Elektrode gemäß Anspruch 1, die eine positive Elektrode ist.

10. Sekundärbatterie, umfassend die Elektrode gemäß Anspruch 1.

## Revendications

1. Electrode comprenant une couche de matériau actif d'électrode qui comprend un matériau actif d'électrode, un caoutchouc nitrile-butadiène hydrogéné et un agent conducteur ;
dans laquelle l'agent conducteur comprend une structure de nanotubes de carbone dans laquelle 2 à 5 000 unités de nanotubes de carbone à paroi simple sont liées les unes aux autres ; et
dans laquelle la structure de nanotubes de carbone est incluse dans la couche de matériau actif d'électrode en une quantité de 0,01 à 0,5 % en poids.

2. Electrode selon la revendication 1, dans laquelle une pluralité des structures de nanotubes de carbone sont connectées les unes aux autres pour former une structure de réseau dans l'électrode.

3. Electrode selon la revendication 1, dans laquelle, dans la structure de nanotubes de carbone, les unités de nanotubes de carbone à paroi simple sont agencées côte à côte et liées.

4. Electrode selon la revendication 1, dans laquelle les unités de nanotubes de carbone à paroi unique présentent un diamètre moyen compris entre 0,5 nm et 10 nm, ce qui correspond à la moyenne des diamètres des 100 nanotubes de carbone à paroi unique supérieurs présentant les plus grands diamètres et des 100 nanotubes de carbone à paroi unique inférieurs présentant les plus petits diamètres lorsque l'électrode est observée en utilisant un microscope électronique à balayage.

5. Electrode selon la revendication 1, dans laquelle les unités de nanotubes de carbone à paroi simple présentent une longueur moyenne de 1 µm à 100 µm, ce qui correspond à la moyenne des longueurs des 100 nanotubes de carbone à paroi simple supérieurs présentant les plus grandes longueurs et des 100 nanotubes de carbone à paroi simple inférieurs présentant les plus petites longueurs lorsque l'électrode est observée en utilisant un microscope électronique à balayage.

6. Electrode selon la revendication 1, dans laquelle les unités de nanotubes de carbone à paroi simple présentent une surface spécifique de 500 m²/g à 1 000 m²/g, telle que déterminée par une méthode BET.

7. Electrode selon la revendication 1, dans laquelle le caoutchouc nitrile-butadiène hydrogéné présente un poids moléculaire moyen de 50 000 g/mol à 500 000 g/mol.

8. Electrode selon la revendication 1, dans laquelle le rapport de poids entre la structure de nanotubes de carbone et le caoutchouc nitrile-butadiène hydrogéné est compris entre 1:0,1 et 1:10.

9. Electrode selon la revendication 1, qui est une électrode positive.

10. Batterie secondaire comprenant l'électrode selon la revendication 1.
